Europäisches Patentamt

European Patent Office

Office européen des brevets

(11) Veröffentlichungsnummer: **0 474 905 A1**

## EUROPÄISCHE PATENTANMELDUNG

(21) Anmeldenummer: **90117628.9**

(22) Anmeldetag: **13.09.90**

(51) Int. Cl.5: **G01F 23/22**, H01H 37/58, H01H 35/18

(43) Veröffentlichungstag der Anmeldung:
**18.03.92 Patentblatt 92/12**

(84) Benannte Vertragsstaaten:
**DE FR GB**

(71) Anmelder: **VDO Adolf Schindling AG**
**Gräfstrasse 103**
**W-6000 Frankfurt/Main 90(DE)**

(72) Erfinder: **Broetto, Costantino**
**Via Armellini 25**
**I-20161 Mailand(IT)**

(74) Vertreter: **Klein, Thomas, Dipl.-Ing. (FH)**
**Sodener Strasse 9 Postfach 6140**
**W-6231 Schwalbach a. Ts.(DE)**

(54) **Niveauschalter.**

(57) Ein Niveauschalter für dielektrische Flüssigkeiten hat einen Magnetschalter (10) mit einem ersten und zweiten Kontaktstreifen (11, 12). Eine magnetische Vorrichtung zum Steuern des Magnetschalters (10) hat einen Dauermagneten (16) und ein Flußleitstück (15), welches sich parallel zur Richtung der Kontaktstreifen (11, 12) erstreckt, so daß es zusammen mit dem Kontaktstreifen (11, 12) einen ringförmigen Verlauf des vom Dauermagneten (16) erzeugten Magnetflusses ermöglicht. Weiterhin hat der Niveauschalter einen elektrischen Heizwiderstand (14) zum Steuern der magnetischen Leitfähigkeit des Flußleitstückes (15). Dieser Heizwiderstand (14) ist wärmeleitend am Flußleitstück (15) angebracht, um es über seinen Curiepunkt zu erwärmen, wenn es nicht von Flüssigkeit benetzt ist.

EP 0 474 905 A1

Rank Xerox (UK) Business Services

Die Erfindung bezieht sich auf einen Niveauschalter zur Überwachung von Flüssigkeiten, bestehend aus einem Magnetschalter mit einem ersten und einem zweiten sich in Längsrichtung erstreckenden Kontaktstreifen und aus magnetischen Steuermitteln, welche durch die Flüssigkeit aktivierbar sind, um diesen Magnetschalter in einen ersten oder zweiten Schaltzustand zu schalten. Ein solcher Niveauschalter kann zur Überwachung des Schmierölstandes in Kraftfahrzeugmotoren oder für andere Zwecke eingesetzt werden, bei der das Niveau einer dielektrischen Flüssigkeit zu überwachen ist.

Es sind zahlreiche Arten von Niveaugebern und Vorrichtungen zur Überwachung der Füllhöhe von Flüssigkeiten bekannt, die unterschiedlichen Ansprüchen im Hinblick auf Einsatz und Funktion gerecht werden. Aufgrund ihrer konstruktiven und funktionsbezogenen Merkmale können solche Niveaugeber in zwei Hauptgruppen unterteilt werden. Die erste Gruppe betrifft Niveaugeber, welche eine ständige Information über das Niveau einer in einem Behälter befindlichen Flüssigkeit geben. Üblicherweise weisen sie einen Schwimmer auf, der über ein Hebelsystem mit dem Schleifer eines Potentiometers verbunden ist, oder sie verfügen über ein Rheostat, das in der Lage ist, einem Anzeigeinstrument ein elektrisches Signal zu übermitteln, das zur Höhe der zu überwachenden Flüssigkeit proportional ist.

Aufgrund ihrer Komplexität sind solche Vorrichtungen nicht für Einsatzmöglichkeiten geeignet, bei denen sie starken Vibrationen oder anderen starken Beanspruchungen ausgesetzt sind, die zu einem Bruch oder zumindest einer Beeinträchtigung der einwandfreien Funktionsweise und Zuverlässigkeit der Vorrichtung führen können. Weiterhin sind sie aufgrund ihrer Komplexität teuer und nicht für die Serienfertigung geeignet, wie zum Beispiel für den Einsatz im Automobilsektor.

Die zweite Gruppe betrifft jene Vorrichtungen, die elektrische und/oder elektronische Systeme einsetzen und beispielsweise ein optisches oder akustisches Alarmsignal erzeugen, wenn die Höhe der zu überwachenden Flüssigkeit auf einen Wert unterhalb eines vorbestimmten Schwellwertes absinkt, ohne daß diese Vorrichtungen jedoch irgendeine spezifische Angabe über die Menge der im Behälter enthaltenen Flüssigkeit liefern.

Ihre Funktionsprinzipien sind unterschiedlich. Nachstehend wird lediglich auf einige schon bekannte Typen Bezug genommen. Ein erster Typ weist einen Schwimmer auf, welcher mit einem Dauermagneten auf einen Magnetschalter einwirkt, der allgemein als Reed-Schalter bekannt ist. Solche Vorrichtungen sind gegenüber externen Magnetfeldern empfindlich. Der Schwimmer bewegt sich in der Nähe des Magnetschalters frei in einer Führung. Er wird stark von den Eigenschaften der Flüssigkeit beeinflußt, beispielsweise von ihrer Dichte und Viskosität, welche sich im Laufe der Zeit oder durch Temperaturschwankungen verändern können. Dadurch ist das Ansprechen einer solchen Vorrichtung wenig zuverlässig. Weiterhin kommt es in einem erheblichen Maße zu einer Schaumbildung, wenn die zu überprüfende Flüssigkeit starken Stößen ausgesetzt ist. Dieser Schaum hat einen negativen Einfluß auf die Bewegungen des Schwimmers. Die Ansprechzeit solcher Vorrichtungen ist groß und sie sind im allgemeinen kaum für Einsatzbereiche geeignet, bei denen ein schnelles Ansprechen einer Alarmvorrichtung erforderlich ist.

Ein zweiter Fühlertyp ist in der italienischen Patentanmeldung 53869 B/78 beschrieben und umfaßt in der zu überwachenden Flüssigkeit zwei elektrische Kontakte in Form von Bimetall-Streifen. Einer dieser Bimetall-Streifen ist von einem elektrischen Heizwiderstand umgeben, der in Serie zu den Kontakten des Schalters geschaltet ist. Der Einsatz von Bimetall-Streifen, welche sich direkt in der zu überwachenden Flüssigkeit befinden, hat jedoch zu zahlreichen Problemen geführt. Da die Bimetalle notwendigerweise in der gleichen Ausdehnungsrichtung angeordnet sind, kann es zu einem falschen Ansprechen der Vorrichtung oder zu einer Beeinträchtigung der Betriebstüchtigkeit kommen, wenn der Kontaktdruck zwischen den Bimetall-Streifen nicht richtig berechnet worden ist.

Im allgemeinen weisen alle bekannten Typen von Niveausensoren einen komplizierten Aufbau auf und sie haben alle bewegliche Teile, die sich in der zu überwachenden Flüssigkeit befinden und die negativ durch die Veränderung der Eigenschaften der zu überwachenden Flüssigkeit oder durch Verunreinigungen in ihr beeinflußt werden können.

Der Erfindung liegt die Aufgabe zugrunde, einen Niveauschalter der eingangs genannten Art zur Überwachung des Niveaus einer dielektrischen Flüssigkeit so auszubilden, daß er keine beweglichen Teile aufweist, die im direkten Kontakt mit der zu überwachenden Flüssigkeit stehen, der aus wenigen, äußerst einfachen Teilen besteht, kostengünstig hergestellt und einfach montiert werden kann und der besonders zuverlässig arbeitet.

Diese Aufgabe wird erfindungsgemäß dadurch gelöst, daß die magnetischen Steuermittel einen Dauermagneten und ein Flußleitstück umfassen, welches sich ausgehend von diesem Dauermagneten parallel zur Richtung der Kontaktstreifen des Magnetschalters erstreckt, wobei dieses Flußleitstück und diese Kontaktstreifen einen ringförmigen Weg als Durchgang für den vom Dauermagneten erzeugten Fluß festlegen und wobei Mittel zur Steuerung des Magnetflusses vorgesehen sind, welche ein wärmeleitend mit dem Flußleitstück verbundenes, elektrisches Heizelement aufweisen, das sich in der zu überwachenden Flüssigkeit befindet, so daß es das Flußleitstück auf einen oberhalb des Curiepunktes liegende Temperatur erwärmt, wenn es nicht in Flüssigkeit eingetaucht ist.

Gemäß dem Funktionsprinzip des erfindungsgemäßen Niveauschalters wird dann, wenn das elektrische Heizelement vom Strom durchflossen und von der Flüssigkeit benetzt wird, der größte Teil der erzeugten Wärme von der Flüssigkeit aufgenommen, ohne daß dadurch die Leitfähigkeit des Magnetflusses im Flußleitstück beeinflußt wird, da dessen Temperatur unterhalb eines kritischen Punktes verbleibt, also unterhalb des Curiepunktes. Unter diesen Bedingungen fließt der Magnetfluß entlang eines ringförmigen Weges, der vom Flußleitstück und von den Kontaktstreifen des Magnetschalters festgelegt ist, wobei der Magnetschalter geschlossen bleibt. Wenn jedoch die Flüssigkeit fehlt oder wenn die zu überwachende Flüssigkeit unterhalb eines Schwellenwertes oder einer vorher festgelegten Höhe absinkt, so liegt das elektrische Heizelement frei und wird nicht mehr von der Flüssigkeit benetzt. Es gibt dann die gesamte, erzeugte Wärme an das Flußleitstück ab und erhitzt es schnell auf eine Temperatur oberhalb des entsprechenden Curiepunktes. Das Flußleitstück ändert dann seine magnetischen Eigenschaften und wird nichtmagnetisch. Es verhindert dadurch das Fließen des Magnetflusses in Richtung auf die Kontaktstreifen des Magnetschalters, der dann öffnet. Dadurch wird der Fluß des elektrischen Stromes unterbrochen und ein das Absinken der Flüssigkeit unterhalb des festgelegten Wertes signalisierendes Warnsignal erzeugt.

Diese und weitere Merkmale des erfindungsgemäßen Niveauschalters sowie eine bevorzugte Ausführungsform werden nachfolgend anhand der Zeichnung genauer beschrieben. In ihr zeigen die

Fig. 1   eine schematische Darstellung eines Niveauschalters nach der Erfindung,

Fig. 2   ein Diagramm, welches die Abhängigkeit der magnetischen Induktion in einem Flußleitstück des Niveauschalters von der Temperatur zeigt,

Fig. 3   eine perspektivische Ansicht eines Niveauschalters nach der Erfindung,

Fig. 4   eine Seitenansicht des Niveauschalters nach Figur 3,

Fig. 5   einen Längsschnitt durch den Niveauschalter entlang der Linie 5 - 5 in Figur 4,

Fig. 6   ein Schaltschema für einen möglichen Einsatz des Niveauschalters nach der Erfindung.

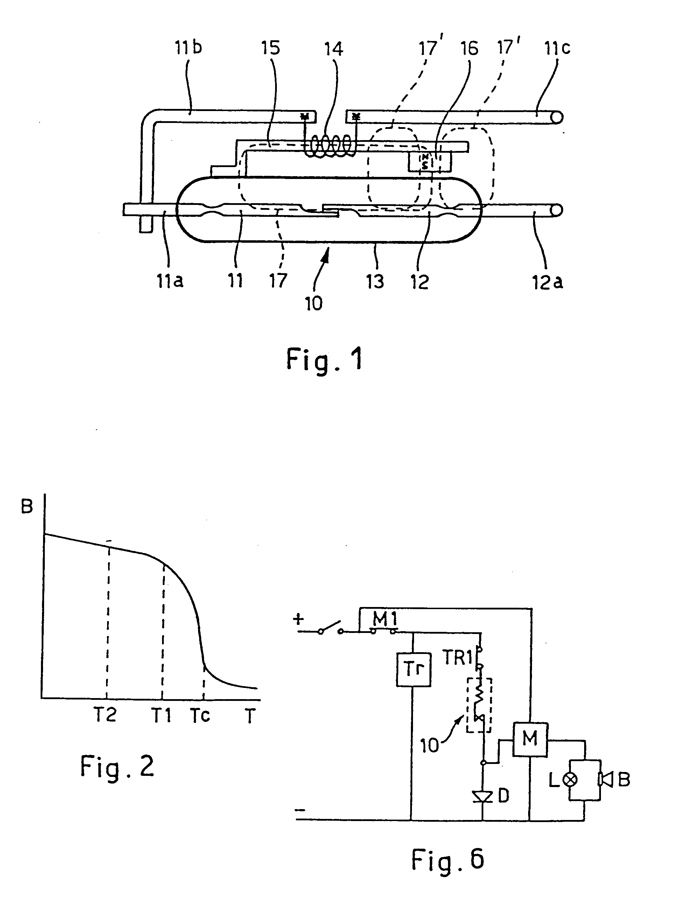

Wie Figur 1 zeigt, hat der Niveauschalter im wesentlichen einen grundsätzlich bekannten, allgemein als Reedkontakt bezeichneten Magnetschalter 10, der normalerweise offen ist und der in einem Glaskolben 13 in Längsrichtung ausgerichtet einen ersten Kontaktstreifen 11 aus Metall und einen zweiten Kontaktstreifen 12 aus Metall aufweist. Die Figur 1 zeigt den Magnetschalter 10 im geschlossenen Zustand, durch den er durch einen Magnetfluß 17 gelangt.

Einer der Kontaktstreifen, zum Beispiel der Kontaktstreifen 12, ist direkt mit einer Stromquelle verbunden. Der andere Kontaktstreifen 11 ist mit dieser Stromquelle über einen elektrischen Heizwiderstand 14 verbunden, der um ein Flußleitstück 15 wärmeleitend gewickelt ist. Dieser Heizwiderstand 14 stellt ein Mittel zur Steuerung des magnetischen Flusses dar, der ringförmig durch das Flußleitstück 15 und den Kontaktstreifen 11, 12 verläuft.

Die Figur 1 verdeutlicht insbesondere, daß das Flußleitstück 15 sich parallel zu den Kontaktstreifen 11, 12 erstreckt und daß gegen das Flußleitstück 15 ein Dauermagnet 16 anliegt, dessen Magnetisierungsachse quer zum Flußleitstück 15 und dem Magnetschalter 10 verläuft, so daß seine Pole Nord und Süd zum Flußleitstück bzw. zum Kontaktstreifen 12 hin gerichtet sind, so daß im geschlossenen Zustand des Magnetschalters 10 der dargestellte, vom Dauermagneten 16 erzeugte, ringförmige Magnetfluß 17 entsteht.

Die Lage des Dauermagneten 16 und ganz allgemein die Mittel zur Erzeugung des Magnetflusses 17 durch den Magnetschalter 10 ist sorgfältig festzulegen, damit der Magnetfluß 17 durch beide Kontaktstreifen 11, 12 und ihren Kontaktbereich verläuft, um entgegengesetzte Polaritäten zu erzeugen, durch die der Magnetschalter 10 in den geschlossenen Zustand gebracht und gehalten wird. Daher ist es für den Dauermagneten 16 und allgemeiner gesagt für die Mittel zur Erzeugung des Magnetflusses erforderlich, daß sie eine solche Lage einnehmen, daß der Magnetfluß den vorstehend angeführten, ringförmigen Verlauf hat.

Weniger kritisch ist die Lage und Positionierung des elektrischen Heizwiderstandes 14. Hierbei ist lediglich die Bedingung einzuhalten, daß er einen thermischen Kontakt zum Flußleitstück 15 hat und daß der Heizwiderstand 14 sich in der zu überwachenden Flüssigkeit befinden muß.

Unter Bezugnahme auf die Figuren 1 und 2 wird nun die Funktionsweise des erfindungsgemäßen Niveauschalters beschrieben. Figur 2 zeigt einen typischen Verlauf der magnetischen Induktion B des Flußleitstückes 15 oder allgemein eines magnetisch leitenden Materials in Abhängigkeit von der Temperatur T. Wie aus dieser Figur 2 ersichtlich, nimmt die Induktion B zunächst langsam bis auf einen Wert T1 ab, wo die Kurve abknickt. Dieser anfängliche Abfall ist so gering, daß die Induktion B als im wesentlichen konstant angesehen werden kann, so daß die Änderungen des Magnetflusses im Flußleitstück 15 zu keiner Beeinflussung des Magnetschalters 10 führen und dieser geschlossen bleibt.

Oberhalb von T1 führt eine weitere Erhöhung der Temperatur T zu einem plötzlichen Abfallen der Induktion B bis auf nahezu Null bei der Temperatur TC; dieser Punkt ist als Curiepunkt bekannt. Bei dieser Temperatur wird das Material des Flußleitstückes 15 magnetisch nichtleitend, so daß der Magnetfluß 17 zu den Kontaktstreifen 11, 12 des Magnetschalters 10 unterbrochen wird und er öffnet.

Sofern die zu überwachende Flüssigkeit, in der sich der Niveauschalter befindet, bis oberhalb eines bestimmten, vorher festgelegten Schwellwertes liegt und deshalb den Heizwiderstand 14 benetzt, wird die erzeugte Wärme fast vollständig an die Flüssigkeit abgegeben. Deshalb kann sich dann das Flußleitstück 15 nicht erwärmen und die kritische Temperatur des Curiepunktes TC erreichen. Unter diesen Bedingungen bleibt das Flußleitstück 15 magnetisch leitend und ermöglicht die Ausbildung des ringförmigen Magnetflusses 17, der durch das Flußleitstück 15, durch den Dauermagneten 16 und durch die Kontaktstreifen 11, 12 des Magnetschalters 10 festgelegt ist. Bei diesen Bedingungen werden die Kontakte des Magnetschalters magnetisch in ihrer in Figur 1 gezeigten Schließstellung festgehalten. Dadurch ist die Stromversorgung des Heizwiderstandes 14 möglich, der weiterhin die erzeugte Wärme überwiegend an die zu überwachende Flüssigkeit abgibt.

Sofern der Niveauschalter zur Überwachung des Schmierölstandes eines Kraftfahrzeugmotors eingesetzt wird, so bildet dieser Niveauschalter einen Teil eines Steuer-Schaltkreises, welcher in Figur 6 gezeigt ist. In dieser Figur ist der Magnetschalter 10 mit der Stromquelle über den Kontakt TR1 eines Verzögerungsrelais TR verbunden, das seinerseits durch eine Speicherschaltung M über einen Kontakt M1 gesteuert wird, der wiederum durch ein Spannungssignal aktiviert wird, das am Magnetschalter 10 oberhalb einer Diode D abgegriffen wird. L und B bezeichnen eine optische und akustische Anzeige, die durch den Speicher M aktiviert wird.

Wenn die Höhe der Flüssigkeit auf einen Wert unterhalb eines vorher festgelegten Schwellwertes absinkt und teilweise oder vollständig den Heizwiderstand 14 freilegt, so wird die von diesem Heizwiderstand 14 erzeugte Wärme vollständig an das Flußleitstück 15 abgegeben, dessen Temperatur dann rasch über den Punkt T1 hinaus ansteigt. Hierdurch fällt der Induktionswert B auf einen Wert nahe Null ab, sobald der Curiepunkt TC erreicht wird. Dann erfolgt die Deaktivierung der magnetischen Mittel zur Steuerung des Magnetschalters 10. Das bedeutet, daß das Flußleitstück 15 nicht mehr magnetisch ist und nicht mehr in der Lage sein kann, den vom Dauermagneten 16 erzeugten Magnetfluß 17 weiterzuleiten. Der Magnetfluß verläuft dann auf einem anderen Wege und führt nur noch über einen Kontaktstreifen 12 des Magnetschalters 10, was schematisch durch gestrichelte Linien 17' in Figur 1 angedeutet wurde.

Bei Fortfall des Magnetflusses entlang der Kontaktstreifen 11, 12 öffnet der Magnetschalter 10 und unterbricht den Fluß des elektrischen Stromes. Diese Unterbrechung des Stromes wird vom Speicher M als Signal dahingehend gedeutet, daß die Flüssigkeit auf einen Wert unterhalb des zu überwachenden, kritischen Wertes abgesunken ist. Gleichzeitig öffnet der Speicher den Kontakt M1, der mit Ausnahme der Stromversorgung der Anzeigen L und /oder B die Stromversorgung sämtlicher Schaltkreise unterbricht.

Aufgrund der äußerst geringen thermischen Masse des Flußleitstückes erfolgt der Übergang von TC nach T2 innerhalb kürzester Zeit, also innerhalb von ein bis zwei Sekunden. Dies ermöglicht eine sehr kurze Ansprechzeit.

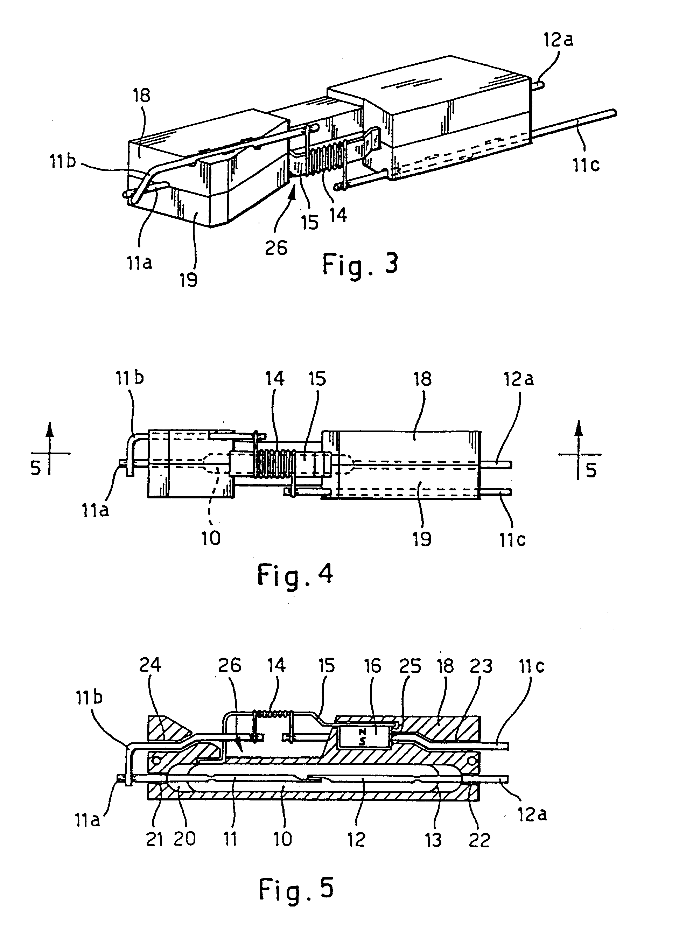

Der erfindungsgemäße Niveauschalter kann auf ganz einfache Art und Weise hergestellt und montiert werden. Dies ergibt sich beispielsweise aus den Figuren 3 und 4 der Zeichnung, die eine bevorzugte Ausführungsform des Niveauschalters zeigen, ohne daß dies einschränkend zu verstehen ist. Diese Ausführungsform fußt auf den vorstehend dargelegten Grundsätzen. In Figur 4 sind die gleichen Bezugszeichen wie in Figur 1 verwandt, um ähnliche oder entsprechende Teile der Vorrichtung zu bezeichnen. Die gezeigte Vorrichtung umfaßt einen Behälter, der zum Beispiel aus zwei symmetrischen und spiegelförmigen Halbschalen 18, 19 besteht, die zum Beispiel durch Einrastungen oder auf eine andere Art und Weise fest miteinander verbunden sein können. Die beiden Halbschalen 18, 19 legen zur Unterbringung des Magnetschalters 10 eine längliche Innenkammer 20 fest. Die Innenkammer 20 hat gleichen Durchmesser wie der Magnetschalter 10, jedoch eine größere Länge als der Glaskolben 13, um es zu ermöglichen, den Glaskolben 13 axial in jene Position zu bringen, die für ein ordnungsgemäßes Fließen des Magnetflusses besonders geeignet ist.

An den Enden der Innenkammer 20 sind zum Durchführen der aus dem Magnetschalter 10 herausragenden Enden 11a und 12a der Kontaktstreifen 11, 12 Öffnungen 21, 22 vorgesehen. Das eine axiale Verlängerung bildende Ende 11a der Kontaktstreifen 11 tritt aus der Öffnung 21 heraus und berührt einen Leiter 11b, der durch eine Öffnung 24 zu einem Ende des Heizwiderstandes 14 geführt ist. Das andere Ende des Heizwiderstandes 14 ist mit einem Leiter 11c verbunden, der auf der entgegengesetzten Seite durch eine Öffnung 23 geführt ist.

Mit 25 ist ein Sitz positioniert, auf den der Dauermagnet 16 und ein Ende des Flußleitstückes 15 anzuordnen sind. Mit 26 ist ein nach außen offener Sitz positioniert, der sich auf einer Seite des Gehäuses des Niveauschalters befindet und in dem jener Abschnitt des Flußleitstückes 15 untergebracht wird, der den elektrischen Heizwiderstand 14 trägt, welcher mit der zu überwachenden Flüssigkeit in Kontakt stehen soll. Da der Niveauschalter üblicherweise mit seiner Längsachse in senkrechter Stellung eingesetzt wird, ist der Sitz 26 zur Aufnahme des Heizwiderstandes 14 mit geneigten Außenwänden zu versehen, um das Abtropfen der Flüssigkeit zu erleichtern.

Der Zusammenbau der Vorrichtung erfolgt ganz einfach dadurch, daß eine Halbschale, zum Beispiel die Halbschale 19, mit ihrer offenen Seite nach oben gelegt wird, so daß in sie die verschiedenen Bauteile eingeführt werden können, also das Flußleitstück 15 und der mit ihm schon vorher zusammengebaute Heizwiderstand 14. Danach wird die Halbschale 18 auf der Halbschale 19 befestigt. Auf diese Art und Weise erhält man einen äußerst einfachen Niveauschalter, der automatisch zusammengebaut werden kann und dessen Kosten daher äußerst gering sind. Aufgrund der Möglichkeit, die Stellung des Magnetschalters 10 in bezug auf den Dauermagneten 16 während des Zusammenbaus zu verändern, da die Innenkammer 20 eine Länge aufweist, die größer als die Länge des Glaskolbens 13 ist, besteht die Möglichkeit, die Eichung des Schaltpunktes ganz genau vorzunehmen, um eine ordnungsgemäße Funktionsweise der Vorrichtung sicherzustellen.

Es versteht sich, daß die Angaben und Hinweie zu den verschiedenen Figuren lediglich als Beispiel und nicht als Einschränkung der allgemeinen Gedanken der vorliegenden Erfindung zu verstehen sind, die im wesentlichen darin besteht, daß in Verbindung mit einem Kontaktstreifen aufweisenden Magnetschalter ein Flußleitstück verwandt wird und die magnetischen Eigenschaften des Flußleitstückes durch einen elektrischen Heizwiderstand verändert werden, der sich in der zu überwachenden Flüssigkeit befindet, wobei dieser Heizwiderstand das Flußleitstück unverzüglich auf eine Temperatur oberhalb des kritischen Curiepunktes bringt, was zu einer Unterbrechung oder Umlenkung des Weges des Magnetflusses zu den Kontaktstreifen des Magnetschalters führt.

Obwohl theoretisch beliebige Magnetmaterialien für das Flußleitstück 15 und für den Dauermagneten 16 eingesetzt werden können, ist es für bestimmte Einsatzzwecke, zum Beispiel für die Ölstandskontrolle in Kraftfahrzeugmotoren, zweckmäßig, hochleitfähige Materialien einzusetzen, deren Curiepunkt zwischen 200 und 300 Grad Celsius liegt. Für den Dauermagneten sind Magnetmaterialien einzusetzen, die in der Lage sind, hohe magnetische Induktionen und Flußdichten zu erzeugen, beispielsweise soll der Br-Wert, also der Wert für den remanenten Magnetismus, zwischen 0,8 und 1,0 Tesla liegen und das Anzugsvermögen M sollte bei ungefähr 650 bis 750 KA/m liegen. Durchgeführte Versuche ergaben ausgezeichnete Ergebnisse bei Einsatz von Magneten auf der Grundlage von Kobalt und seltenen Erden bzw. gleichwertigen Materialien.

Die Wickelrichtung des elektrischen Widerstandes 14 und die Flußrichtung des elektrischen Stromes sind so zu wählen, daß ein zusätzlicher Fluß erzeugt wird, der jeweils gleichgerichtet ist bzw. zu jenem Fluß hinzukommt, der vom Dauermagneten 16 erzeugt wird. Dadurch ergeben sich verschiedene Vorteile: Zunächst erzeugt der Strom, der die Windungen des auf dem Flußleitstück 15 aufgewikkelten, elektrischen Heizwiderstandes 14 durchfließt, einen magnetischen Fluß, der zur Verstärkung des Flusses des Dauermagneten 16 dient, wodurch sich der Anpreßdruck zwischen den Kontaktstreifen des Magnetschalters erhöht, wodurch anfänglich das Leitvermögen für den den Magnetschalter 10 und den Heizwiderstand 14 durchfließenden elektrischen Strom verbessert wird. Unmittelbar danach führt die starke Erhitzung des Flußleitstückes 15 sowohl zu einer starken Abnahme des Leitvermögens für den Fluß im Flußleitstück 15, sobald der Curiepunkt überschritten wird, und andererseits auch durch die Erwärmung aufgrund der vom Flußleitstück abgegebenen Wärme zu einer Verringerung des Flusses, der vom Dauermagneten 16 erzeugt wird. Diese beiden Erscheinungen summieren sich vorteilhaft, um das Magnetfeld in ein starkes Ungleichgewicht zu bringen und dadurch das schnelle Öffnen des Schalters zu ermöglichen.

## Patentansprüche

1. Niveauschalter zur Überwachung von Flüssigkeiten, bestehend aus einem Magnetschalter mit einem ersten und einem zweiten sich in Längsrichtung erstreckenden Kontaktstreifen und aus magnetischen Steuermitteln, welche durch die Flüssigkeit aktivierbar sind, um diesen Magnetschalter in einen ersten oder zweiten Schaltzustand zu schalten, dadurch gekennzeichnet, daß die magnetischen Steuermittel einen Dauermagneten (16) und ein Flußleitstück (15) umfassen, welches sich ausgehend von diesem Dauermagneten (16) parallel zur Richtung der Kontaktstreifen (11, 12) des Magnetschalters (10) erstreckt, wobei dieses Flußleitstück (15) und diese Kontaktstreifen (11, 12) einen ringförmigen Weg als Durchgang für den vom Dauermagneten (16) erzeugten Fluß festlegen und wobei Mittel zur Steuerung des Magnetflusses vorgesehen sind, welche ein wärmeleitend mit dem Flußleitstück (15) verbundenes, elektrisches Heizelement (Heizwiderstand 14) aufweisen, das sich in der zu überwachenden Flüssigkeit befindet, so daß es das Flußleitstück (15) auf einen oberhalb des Curiepunktes liegende Temperatur erwärmt, wenn es nicht in Flüssigkeit eingetaucht ist.

2.  Niveauschalter nach Anspruch 1, dadurch gekennzeichnet, daß der Dauermagnet (16) sich in der Nähe eines Kontaktstreifens (12) des Magnetschalters (10) befindet, wobei seine Magnetpole zu diesem Kontaktstreifen (12) und zum Flußleitstück (15) ausgerichtet sind.

3.  Niveauschalter nach Anspruch 1, dadurch gekennzeichnet, daß das elektrische Heizelement aus einem Heizwiderstand (14) besteht, der um das Flußleitstück (15) gewickelt ist.

4.  Niveauschalter nach Anspruch 3, dadurch gekennzeichnet, daß der Heizwiderstand (14) sich in Serienschaltung zu den Kontaktstreifen (11, 12) des Magnetschalters (10) befindet.

5.  Niveauschalter nach Anspruch 1, dadurch gekennzeichnet, daß der Dauermagnet (16) in bezug auf den Kontaktpunkt der beiden Kontaktstreifen des Magnetschalters axial nach einer Seite hin versetzt ist.

6.  Niveauschalter nach einem beliebigen der vorstehenden Ansprüche, dadurch gekennzeichnet, daß er ein Gehäuse hat, welches eine Innenkammer (20) zur Aufnahme des Magnetschalters (10) und einen ersten Sitz (25) für die Aufnahme des Dauermagneten (16) sowie einen zweiten Sitz (26) für den elektrischen Heizwiderstand (14) und das Flußleitstück (15) aufweist, wobei dieser zweite Sitz (26) auf einer Seite nach außen offen ist.

7.  Niveauschalter nach Anspruch 6, dadurch gekennzeichnet, daß der Sitz (26) zur Aufnahme des Heizwiderstandes (14) geneigte Seitenflächen aufweist.

8.  Niveauschalter nach Anspruch 6, dadurch gekennzeichnet, daß die Innenkammer (20) zur Aufnahme des Magnetschalters (10) eine Länge hat, die über der Länge des Magnetschalters (10) liegt.

Fig. 1

Fig. 2

Fig. 6

Fig. 3

Fig. 4

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-B-1 202 903   (TELEFONBAU UND NORMALZEIT)<br>* Spalte 1, Zeile 44 - Spalte 2, Zeile 42; Figuren 1, 2 *<br>– – – | 1-4 | G 01 F 23/22<br>H 10 H 37/58<br>H 01 H 35/18 |
| Y | DE-A-1 523 425   (VAPOR CORP.)<br>* Seite 6, letzter Absatz - Seite 7, Absatz 1; Figuren 2, 5 *<br>– – – | 1-4 | |
| A | US-A-3 295 081   (K.M. BOWYER)<br>* Figur 3 *<br>– – – | 5 | |
| A | GB-A-2 036 440   (FRATELLI BORLETTI)<br>* Seite 2, Zeile 117 - Seite 3, Zeile 52; Figuren 1, 3 *<br>– – – | 1 | |
| A | DE-A-2 137 906   (TOHOKU METAL INDUSTRIES)<br>* Seite 5, letzter Absatz - Seite 6, Absatz 1 * * Seite 8, letzter Absatz - Seite 9, Absatz 1; Figuren 2A, 4 *<br>– – – | 1 | |
| A | DE-B-1 263 931   (STANDARD ELEKTRIK LORENZ AKTIENGESELLSCHAFT)<br>* Spalte 3, Zeilen 31 - 52; Figur 1 *<br>– – – – – | 1 | |

|  |
|---|
| **RECHERCHIERTE SACHGEBIETE (Int. Cl.5)**<br><br>G 01 F<br>H 10 H<br>H 01 H |

Der vorliegende Recherchenbericht wurde für alle Patentansprüche erstellt

| Recherchenort | Abschlußdatum der Recherche | Prüfer |
|---|---|---|
| Den Haag | 13 Mai 91 | HEINSIUS R. |